# EUROPÄISCHE PATENTSCHRIFT

(11) **EP 0 895 682 B1**
(45) Veröffentlichungstag und Bekanntmachung des Hinweises auf die Patenterteilung: **17.07.2002**
(21) Anmeldenummer: 97920527.5
(22) Anmeldetag: 19.03.1997
(51) Int. Cl.: H04L 12/40, B60R 16/02

(54) **BUSSYSTEM FÜR DIE ÜBERTRAGUNG VON NACHRICHTEN**
BUS SYSTEM FOR DATA TRANSFER
SYSTEME DE BUS POUR LE TRANSFERT DE MESSAGES

(30) Priorität: 24.04.1996 DE 19616293
(43) Veröffentlichungstag der Anmeldung: 10.02.1999
(73) Patentinhaber: ROBERT BOSCH GMBH, 70442 Stuttgart (DE)
(72) Erfinder: BAUER, Joachim, D-71720 Oberstenfeld (DE)
(86) Internationale Anmeldenummer: DE9700558
(87) Internationale Veröffentlichungsnummer: WO9740604

(56) Entgegenhaltungen:
- DE-A- 4 201 468
- "BUS CONTENTION AND OVERLOAD DETECTING TRANSMITTER" IBM TECHNICAL DISCLOSURE BULLETIN, Bd. 34, Nr. 8, 1.Januar 1992, Seiten 10-13, XP000302029
- PATENT ABSTRACTS OF JAPAN vol. 016, no. 254 (E-1213), 9.Juni 1992 & JP 04 054040 A (FUJITSU TEN LTD), 21.Februar 1992,

## Beschreibung

### Stand der Technik

Die Erfindung geht aus von einem Bussystem für die Übertragung von Nachrichten, von einer Peripherieeinheit für ein Bussystem, sowie von einem Gerät zur Aussendung von Nachrichten nach der Gattung der unabhängigen Patentansprüche 1, 7 und 14. Aus der DE 35 06 118 C2 ist bereits ein Bussystem zur Übertragung von Nachrichten bekannt, welches auch als CAN-Bus bezeichnet wird. Beim CAN-Bus werden Nachrichten mit hoher Dringlichkeit bevorzugt übertragen. Dazu ist jeder Nachricht ein sogenannter Header vorgeordnet, der darüber entscheidet, welche Nachricht bei freiem Bus zunächst übertragen wird. Es ist jedoch nicht möglich, eine laufende Nachricht zu unterbrechen. Weiterhin weisen alle Nachrichten die gleiche Amplitude zwischen Highund Low-Bitzuständen auf.

Aus dem IBM Technical Disclosure Bulletin, Bd.34, Nr.8, 1.Jan. 1992, S. 10-13, ist bereits ein Bussystem bekannt, bei dem Nachrichten durch Überschreiben von Bits abgebrochen werden können. In einer darauf folgenden neuen Arbitrierung können dann Nachrichten mit höherer Priorität Zugang zum Bus erhalten.

### Vorteile der Erfindung

Das Bussystem, die Peripherieeinheit und das Gerät zur Aussendung von Nachrichten mit den erfindungsgemäß kennzeichnenden Merkmalen der unabhängigen Patentansprüche haben demgegenüber den Vorteil, daß Nachrichten unterschiedlicher Dringlichkeit deutlich voneinander separiert werden. Da die Nachrichten mit hoher Dringlichkeit jederzeit die Nachrichten mit geringer Dringlichkeit überschreiben können, können Nachrichten mit hoher Dringlichkeit jederzeit, d. h. auch während der laufenden Übertragung einer Nachricht mit geringer Dringlichkeit, übertragen werden. Weiterhin ist es möglich, für die Nachrichten hoher Dringlichkeit völlig andere Verarbeitungsregeln, d. h. ein völlig anderes Übertragungsprotokoll, zu benutzen als für die Nachrichten mit geringer Dringlichkeit.

Vorteilhafte Ausgestaltungen und Weiterbildungen ergeben sich aus den Merkmalen der abhängigen Patentansprüche. Durch eine Variation der Bitlänge können Nachrichten mit großer Dringlichkeit wesentlich schneller übertragen werden als Nachrichten mit geringer Dringlichkeit. Weiterhin können so die elektromagnetischen Störungen durch Bitfolgen auf den Busleitungen bei Nachrichten geringer Dringlichkeit gering gehalten werden. Die Übertragung der Nachrichten kann auf nur zwei Busleitungen erfolgen, über die zudem die Energie für die Peripherieeinheiten übertragen wird. Der Aufwand für die Verkabelung zwischen Steuergerät und Peripherieeinheiten kann somit gering gehalten werden. Besonders vorteilhaft kann das Bussystem zur Auslösung von Sicherheitssystemen in Kraftfahrzeugen eingesetzt werden, wobei dabei eine konstante Diagnose der Betriebsbereitschaft der Peripherieeinheiten möglich ist. Die Rückantwort der Peripherieeinheiten erfolgt besonders einfach durch einen Kurzschluß der Busleitungen.

### Zeichnungen

Ausführungsbeispiele der Erfindung sind in den Zeichnungen dargestellt und in der nachfolgenden Beschreibung näher erläutert. Es zeigen
die Figur 1 eine Übersicht über das Bussystem,
die Figur 2 die Signalpegel auf dem Bussystem,
Figur 3 und 4 die daraus separierten Nachrichten,
Figur 5 und 6 die Codierung einer Diagnoseanforderung bzw. eines Auslösungsbefehls,
Figur 7 die Busankopplung einer Peripherieeinheit,
Figur 8 die Energieversorgung einer Peripherieeinheit und
Figur 9 die Signalseparierung einer Peripherieeinheit.

### Beschreibung

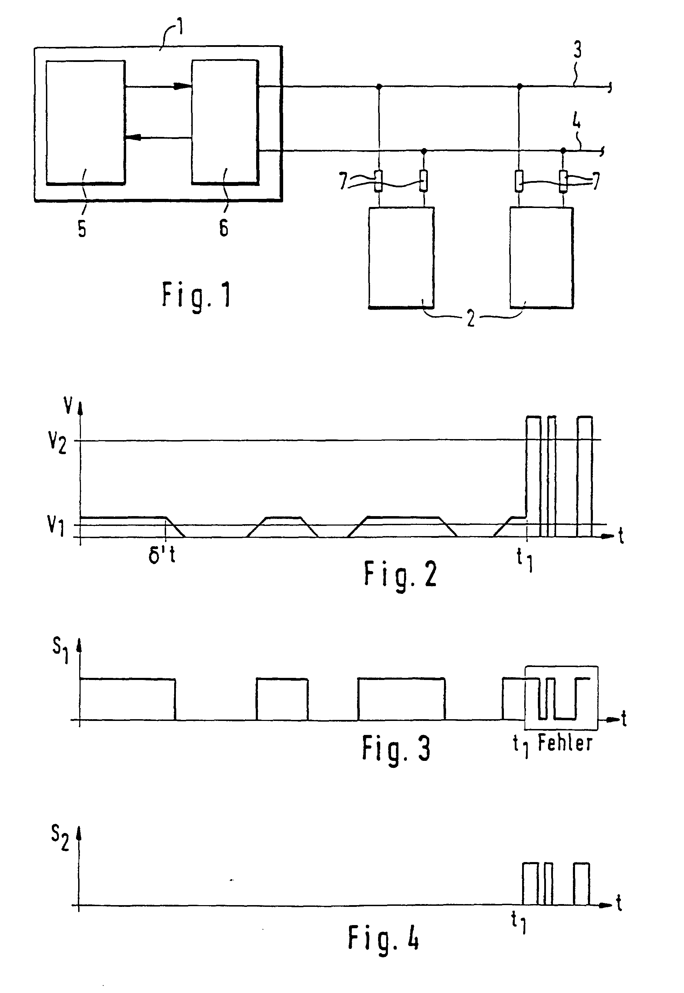

In der Figur 1 wird ein Steuergerät 1 gezeigt, welches über Busleitungen Bus-High 3, Bus-Low 4 mit mehreren Peripherieeinheiten 2 verbunden ist. Das Steuergerät 1, welches im folgenden auch vereinfacht als Gerät bezeichnet wird, weist einen Mikrorechner 5 und ein Businterface 6 auf. Die Leitung Bus-High 3 und die Leitung Bus-Low 4 sind mit dem Businterface 6 verbunden. Jede der Peripherieeinheiten ist über jeweils einen Schutzwiderstand 7 jeweils mit der Leitung Bus-High 3 und der Leitung Bus-Low 4 verbunden.

Durch die beiden Leitungen Bus-High 3 und Bus-Low 4 wird ein Zweidrahtbus geschaffen, durch den Nachrichten zwischen dem Steuergerät 1 und den Peripherieeinheiten 2 ausgetauscht werden können. Da für einen derartigen Bus nur zwei Leitungen erforderlich sind, wird der Aufwand an Verkabelung zwischen Steuergerät 1 und Peripherieeinheiten 2 besonders gering gehalten. Der Austausch von Nachrichten über den Bus erfolgt dadurch, daß die jeweils sendende Station elektrische Signale, sowohl Stromsignale als auch Spannungssignale, auf die Busleitungen 3, 4 gibt, die dann von der empfangenden Station ausgewertet werden. Dabei kann die Auswertung der Signale durch einen Vergleich der beiden Busleitungen 3, 4 erfolgen, oder aber es wird nur das Signal einer der Leitungen ausgewertet. Die Nachrichten bestehen dabei aus einer Folge von Bitzuständen, die jeweils nur den Bitzustand Low oder High annehmen können.

In der Figur 2 wird eine solche Abfolge von Bitzuständen in einem Diagramm dargestellt. Die Folge von Bitzuständen ist gegen die Zeit t aufgetragen. Für die weitere Beschreibung wird davon ausgegangen, daß es sich um ein Spannungssignal handelt, so daß entlang der vertikalen Achse eine Spannung V aufgetragen ist. Zunächst wird die Bitfolge bis zum Zeitpunkt t1 betrachtet. Die Bitfolge besteht aus einem Spannungssignal, welches entweder oberhalb einer Vergleichsspannung V1 (Bitzustand = High) oder unterhalb einer Vergleichsspannung V1 (Bitzustand = Low) liegt. Eine derartige Bitfolge kann erzeugt werden, indem auf den Busleitungen 3, 4 entsprechende Spannungszustände erzeugt werden, die dann in der Differenz ausgewertet werden oder aber eine der Leitungen wird mit einem konstanten Potential beaufschlagt (beispielsweise dem Potential V1), während die andere Leitung ein veränderliches Potential aufweist, das der Bitfolge entspricht. Die Amplitude des Spannungssignals, d. h. der Spannungsunterschied zwischen dem Zustand High und dem Zustand Low wird gering gewählt, d. h. es liegt nur eine Amplitude von wenigen Volt (typisch 1 Volt)vor. Weiterhin werden die Busleitungen so angesteuert, daß die Änderungen zwischen den High- und Low-Bitzuständen nicht schlagartig erfolgen, sondern eine gewisse Übergangszeit δt benötigen. Eine derartige Bitfolge mit kleiner Amplitude und relativ langen Übergangszeiten zwischen den einzelnen Bitzuständen ist nur für die relativ langsame Übertragung von Nachrichten geeignet. Vorteilhaft ist jedoch an einer derartigen Übertragung von Nachrichten, daß die durch den Bus verursachten elektromagnetischen Störungen besonders gering sind. Eine derartige Übertragung von Nachrichten ist daher im besonderen Maße geeignet, wenn die Nachrichten nicht von großer zeitlicher Dringlichkeit sind. Der Zeitrahmen für die Bitzustände, d. h. die zeitliche Dauer, die benötigt wird, um ein einzelnes Bit als Low oder High zu indentifizieren, ist weiterhin bei dieser Art der Nachrichtenübermittlung besonders lang gewählt.

Nach dem Zeitpunkt t1 ändert sich die Bitfolge, die durch den Bus übertragen wird. Die Bitzustände weisen eine hohe Amplitude auf, d. h. sie variieren zwischen dem Spannungszustand 0 und einem sehr hohen Spannungssignal (typischerweise 10 Volt). Weiterhin sind die Übergangsflanken zwischen den einzelnen Spannungszuständen sehr steil, wodurch starke elektromagnetische Störungen verursacht werden. Durch die hohe Flankensteilheit und die große Amplitude der Signale können die Zeiten, die zur Erkennung eines Bitzustandes benötigt werden, gering gehalten werden, d. h. die Zeitdauer, während der der Signalpegel in einem bestimmten Zustand gehalten werden muß, ist gering. Die Auswertung dieser Bitfolge erfolgt durch den Vergleich mit einem zweiten Spannungspegel V2 (typisch 8 Volt), wobei ein Spannungszustand oberhalb des Spannungspegels V2 als High und ein Spannungszustand darunter als Low interpretiert wird. Derartige Signale sind im besonderen Maße für die Übertragung von dringlichen Nachrichten geeignet, bei denen zudem in einer kurzen Zeit viele Informationen übertragen werden müssen.

Aufgrund der unterschiedlich großen Amplitude können somit Nachrichten von großer Dringlichkeit jederzeit von den Nachrichten geringer Dringlichkeit unterschieden werden. Es muß daher für das Aussenden einer Nachricht von großer Dringlichkeit nicht mehr abgewartet werden, bis die Nachricht geringer Dringlichkeit zu Ende gesendet wurde, sondern es kann jederzeit mit dem Senden der wichtigeren Nachricht begonnen werden. Dazu erfolgt die Auswertung der Bussignale durch Schaltungen, die die unterschiedlichen Amplituden der auf dem Bus vorliegenden Bitzustände trennen.

In den Figuren 3 und 4 sind die jeweils getrennten Signale dargestellt.

In der Figur 3 ist ein Signal S1 dargestellt, welches durch Vergleich der Bitzustände auf dem Bus mit dem Potential V1 gewonnen wurde. Bis zum Zeitpunkt t1 handelt es sich dabei um die Nachricht, die mit geringer Amplitude übertragen wurde. Ab dem Zeitpunkt t1 wird fehlerhaft das Signal mit hoher Amplitude ausgewertet. Dies ist jedoch ohne Bedeutung, da zu diesem Zeitpunkt die Verarbeitung des Signals hoher Dringlichkeit, welches mit großer Amplitude ausgesendet wird, begonnen wurde, was die Verarbeitung des Signals mit geringer Dringlichkeit stoppt. Dieses Signal mit hoher Dringlichkeit wird in der Figur 4 dargestellt. Aufgetragen ist das Signal S2 gegenüber der Zeit, wobei das Signal S2 durch Vergleich der Bitpegel mit dem Potential V2 gewonnen wurde. Wie zu erkennen ist, tritt bis zum Zeitpunkt t1 keinerlei Signal auf. Erst ab dem Zeitpunkt t1 wird ein Signal erkannt. Dieses Signal stellt ein Signal dar, welches mit hoher Dringlichkeit bearbeitet werden soll.

Bei dem in der Figur 1 gezeigten System von Steuergerät 1, Peripherieeinheiten 2 und Busleitungen 3, 4 wird insbesondere an ein Airbagsystem gedacht. Dieses weist ein Zentralsteuergerät 1 auf und Peripherieeinheiten 2 auf, die jeweils einen Airbag, einen Seitenairbag, einen Gurtstraffer oder andere Elemente aufweisen. Bei einem derartigen Airbagsystem müssen die Befehle zum Auslösen der einzelnen Peripherieeinheiten 2 mit großer Dringlichkeit übertragen werden, wobei dabei keinerlei Verzögerung geduldet werden kann. Weiterhin sollte ein derartiges System in der Lage sein, die Funktionsfähigkeit der einzelnen Peripherieeinheiten 2 konstant zu überprüfen. Es ist daher vorgesehen, daß das Steuergerät 1 Diagnoseanforderungen an die Peripherieeinheiten 2 sendet, die dann durch ein Rücksignal die Funktionstüchtigkeit bestätigen können. Im Vergleich zu den Befehlen zum Auslösen der Peripherieeinheiten 2 sind die Diagnoseanforderungen von geringer Dringlichkeit. Das erfindungsgemäße Bussystem läßt sich somit besonders vorteilhaft für ein Airbagsystem einsetzen, bei dem zwischen dem Steuergerät und den dazugehörigen Peripherieeinheiten konstant Diagnoseinformationen über die Betriebsbereitschaft der einzelnen Peripherieeinheiten 2 ausgetauscht werden und dann mit hoher Dringlichkeit Befehle von dem Steuergerät 1 an die Peripherieeinheiten 2 übermittelt werden müssen, die zum Auslösen der Funktionen der einzelnen Peripherieeinheiten 2 wie Aufblasen eines Airbags oder Auslösen eines Gurtstraffers führen. Da die vom Steuergerät 1 ausgesandten Befehle jederzeit die vom Steuergerät ausgesandten Diagnoseanforderungen aufgrund der größeren Amplitude überschreiben können, können die Befehle verzögerungsfrei, ausgehend von jedem Zwischenzustand der Diagnoseanforderung, auf den Bus gegeben werden.

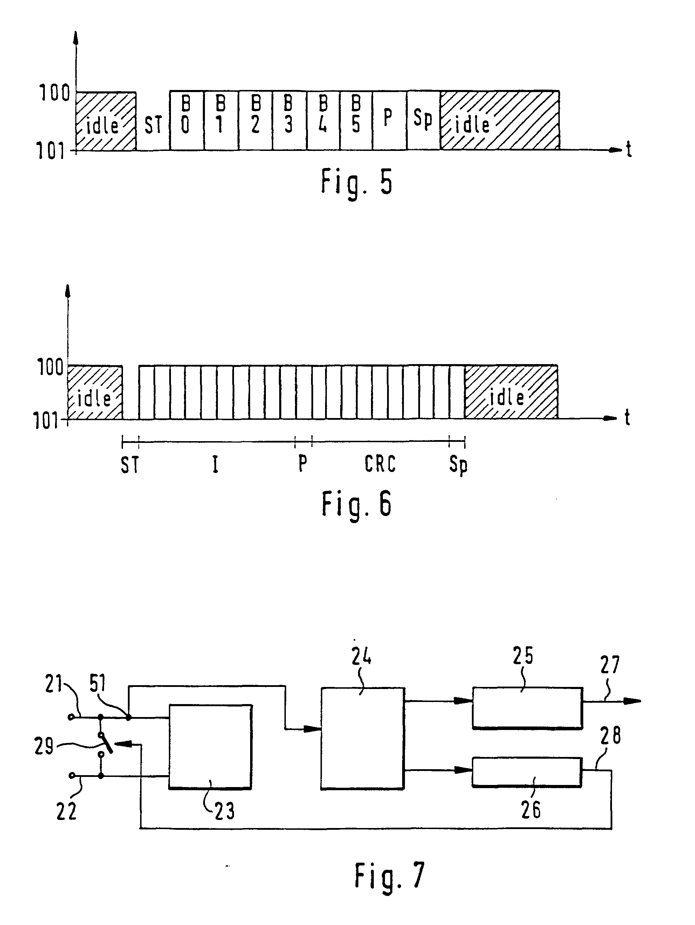

Durch die Amplitudenseparation von Diagnoseanforderungen und Befehlen können die beiden Klassen von Nachrichten völlig unterschiedlich verarbeitet werden. Wie bereits erwähnt wurde, ist es beispielsweise nicht notwendig, für die beiden Klassen von Nachrichten gleiche Bitlängen vorzusehen, sondern die wichtigen Nachrichten können mit höherer Bitrate übertragen werden. Weiterhin ist es möglich, für die beiden unterschiedlichen Klassen von Nachrichten unterschiedliche Nachrichtenprotokolle vorzusehen. Bei einem derartigen Protokoll handelt es sich um eine Vorschrift, wie die einzelnen Nachrichten verarbeitet werden. Dies sei noch einmal in den Figuren 5 und 6 erläutert. In der Figur 5 wird dazu das Protokoll einer Diagnoseanforderung erläutert. In der Figur 5 wird der Bitzustand High 100 und der Bitzustand Low 101 gegen die Zeit aufgetragen. Ausgehend von einem Buszustand Idle, der hier beispielsweise einem High-Zustand entspricht wird ein Startbit St gesendet. Darauf erfolgen dann sechs Bits (Bit B0 - B5), in denen eine Adresse einer Peripherieeinheit 2 angegeben wird. Diese sechs Bits werden durch ein darauffolgendes Paritätsbit P abgesichert. Darauf folgt dann ein Stoppbit (SP), welches das Ende der vom Steuergerät 1 ausgesandten Diagnoseanforderung darstellt. Danach geht der Bus wieder in den Zustand Idle, d. h. auf den Bitlevel High über. Die durch die Diagnoseanforderung angesprochene Peripherieeinheit 2 sendet dann eine Nachricht an das Steuergerät 1, wobei diese Nachricht angibt, ob die Peripherieeinheit 2 betriebsbereit ist. Im einfachsten Fall besteht diese Nachricht darin, daß nach der Aussendung der Diagnoseanforderung während des Buszustandes Idle nach einer vorgegebenen Zeit nach der Diagnoseanforderung ein sogenanntes Lebenssignal, d. h. ein einzelnes Bit von der Peripherieeinheit auf den Bus gegeben wird, sofern die Peripherieeinheit betriebsbereit ist. Ein derartiges Lebenssignal kann besonders einfach dadurch erzeugt werden, indem die angesprochene Peripherieeinheit kurzzeitig die beiden Busleitungen Bus-High 3 und Bus-Low 4 miteinander kurzschließt. Es sind jedoch auch komplexere Rückantworten, die aus einer Bitfolge bestehen, denkbar.

In der Figur 6 wird das Protokoll für einen Auslösebefehl einer Peripherieeinheit 2 dargestellt. Ausgehend von einem Buszustand Idle, der hier durch einen Highzustand 100 gegeben ist, folgt ein erstes Startbit (ST), mit dem der Beginn der Nachricht angezeigt wird. Danach folgt ein Informationsfeld (I) welches hier eine Länge von 10 Bit aufweist. Es sind jedoch auch beliebige andere Längen für das Informationsfeld vorstellbar. Zur Absicherung des Informationsfeldes I ist dann noch ein Paritätsbit P und ein CRC-Feld vorgesehen, durch die ermittelt werden kann, ob alle Bits des Informationsfeldes I richtig übertragen wurden. Auf das CRC-Feld folgt dann ein Stoppbit SP, bevor der Bus wieder in den Zustand Idle übergeht. Jedes Bit des Informationsfeldes I kann einen Auslösebefehl für eine Peripherieeinheit 2 darstellen. Je nachdem, ob das Bit auf High oder Low gesetzt ist, löst das Pheripheriegerät 2 seine Sicherheitsfunktion, beispielsweise Zünden des pyroelektrischen Treibsatzes für einen Airbag oder einen Gurtstraffer aus. Durch einen Befehl, wie er in der Figur 6 dargestellt wird, kann das Steuergerät somit befehlen, welche Peripherieeinheiten 2 auslösen sollen oder nicht. Da ein einzelnes fehlerhaft gesetztes Bit über die Auslösung oder Nichtauslösung eines Airbags entscheidet, ist ein sehr langes CRC-Feld vorgesehen, um die im Informationsfeld übertragenen Bits vor Fehlübertragungen zu sichern. Weiterhin kann vorgesehen werden, daß die in Figur 6 gezeigte Nachricht mehrfach ausgesendet wird, da es bei sicherheitsrelevanten Systemen wie einem Airbag im Falle eines Unfalles auf jeden Fall gewährleistet sein muß, daß eine Zündung des Airbags erfolgt.

Das erfindungsgemäße Bussystem ist somit geeignet, Nachrichten mit völlig unterschiedlichen Vereinbarungen über die Verarbeitung der Nachrichten mit den gleichen Leitungen zu transportieren. Die Diagnoseanforderung, wie sie in der Figur 5 beschrieben wurde, wird aufgrund eines völlig anders gearteten Übertragungsprotokolls verarbeitet als der Befehl nach der Figur 6. Die Diagnoseanforderung nach der Figur 5 kann beispielsweise auch nach einem sogenannten V24-Protokoll übertragen werden, während der Auslösebefehl nach der Figur 6 beispielsweise auch durch das CAN-Protokoll erfolgen kann.

In der Figur 7 wird schematisch die Eingangssignalverarbeitung einer Peripherieeinheit 2 gezeigt. Die Peripherieeinheit weist zwei Eingangsleitungen 21 und 22 auf, die mit den Busleitungen verbunden werden. Die beiden Leitungen 21 und 22 sind mit einer Energieversorgung 23 verbunden. Weiterhin ist eine der Eingangsleitungen 21 mit einer Signalseparierung 24 verbunden. Die Signalseparierung trennt die Signale mit hoher Amplitude von den Signalen geringer Amplitude und führt die Signale mit großer Amplitude einer Befehlsauswertung 25 und die Signale geringer Amplitude einer Diagnoseauswertung 26 zu. Die Signalseparierung 24 wird in ihrem Eingang mit einem Signal beaufschlagt, wie es in der Figur 2 gezeigt wird. Durch Amplitudenseparation stellt dann die Signalseparierung für die Befehlsauswertung 25 das Signal nach der Figur 4 und für die Diagnoseauswertung 26 das Signal nach der Figur 3 zur Verfügung. Aufgrund dieser klaren Separierung der Signale können die Diagnoseanforderungen und die Befehle zum Auslösen der Peripherieeinheit getrennt voneinander verarbeitet werden. Die Befehlsauswertung 25 erkennt eingehende Befehle für die jeweilige Peripherieeinheit, d. h. sie überprüft, ob die eingehenden Befehle für das jeweilige Steuergerät bestimmt sind, und überprüft aufgrund des Paritätsbits bzw. des CRC-Feldes nach der Figur 6, ob auch wirklich ein Befehl für das entsprechende Steuergerät vorliegt. Sofern ein derartiger Befehl erkannt wird, wird ein entsprechendes Ausgangssignal zur weiteren Verarbeitung auf die Ausgangsleitung 27 gegeben, mit der beispielsweise eine Treiberschaltung zur Zündung eines pyroelektrischen Zündsatzes für einen Airbag angestrahlt werden kann. Die Diagnoseauswertung überprüft, wie beispielsweise zur Figur 5 beschrieben wurde, ob die Diagnoseanforderung für das jeweilige Steuergerät bestimmt war. Sie überprüft dann, ob die Peripherieeinheit 2 funktionstüchtig ist, wobei diese Aufgabe auch von einem weiteren Schaltkreis wahrgenommen werden kann, der zur Vereinfachung in der Figur 7 nicht dargestellt ist. Das Ergebnis der Diagnose wird dann über die Ausgangsleitung 28 ausgegeben und so zurück an das Steuergerät 1 gemeldet. In der Figur 7 ist eine einfachste Form der Rückmeldung gezeigt, bei der durch ein Signal auf der Ausgangsleitung 28 ein Schalter 29 geschlossen werden kann, der die beiden Eingangsleitungen 21 und 22 miteinander kurzschließt. Dieser Kurzschluß der beiden Leitungen 21, 22 bewirkt über die Schutzwiderstände 7 eine Annäherung der Potentiale auf den Busleitungen 3, 4, die vom Steuergerät 1 nachgewiesen werden kann.

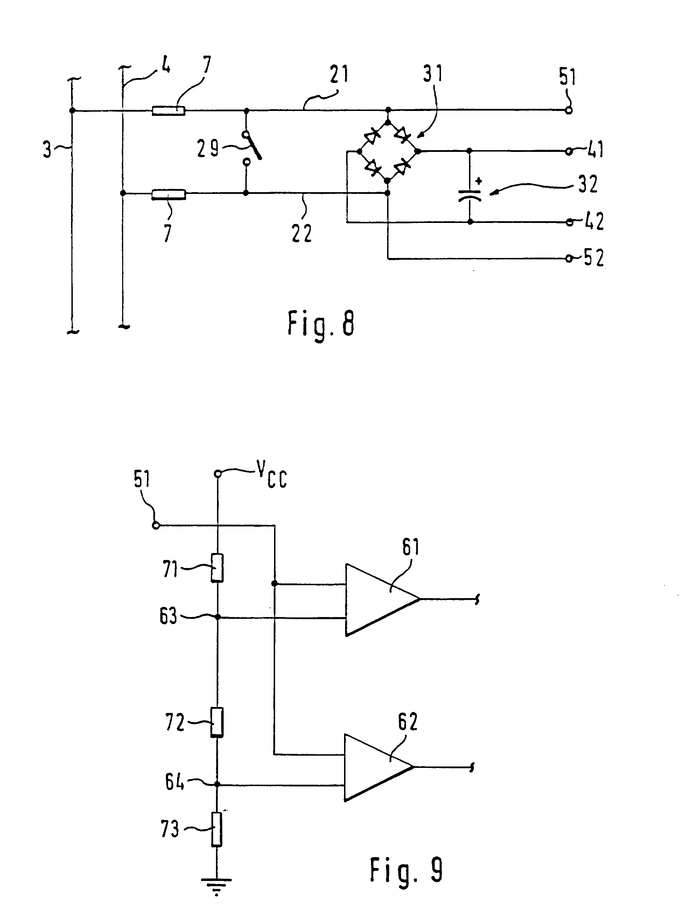

In der Figur 8 wird die Energieversorgung 23 näher erläutert. Die Energieversorgung besteht hier aus einem Gleichrichter 31 und einem Glättungskondensator 32, wobei der Gleichrichter 31 durch die Eingangsleitungen 21, 22 über die Widerstände 7 mit den Busleitungen 3, 4 verbunden ist. Über die Busleitung 3, 4 wird somit nicht nur die Information zur Ansteuerung oder Diagnose der Peripherieeinheiten gesandt, sondern auch die zum Betrieb der Peripherieeinheiten 2 benötigte Energie. Durch die Gleichrichterschaltung 31 ist die Energieversorgung unabhängig von der Polarität der Leitungen 3,4. Weiterhin weist die Energieversorgung 23 hier nicht dargestellte Mittel zur Stromversorgung auf, um die dynamischen Signale auf den Busleitungen 3,4 nicht zu belasten. Wenn die Busleitungen 3, 4 jeweils zwischen einem Massenpotential (Low) und einem Spannungspegel (High) hin- und hergeschaltet werden, muß für eine unterbrechungsfreie Stromversorgung sichergestellt werden, daß jeweils mindestens eine der beiden Busleitungen 3, 4 auf einen Spannungspegel High geschaltet ist. Dies bedeutet, daß wenn auf der einen Busleitung ein High-Pegel ausgegeben wird, auf der anderen Busleitung ein Low-Pegel anliegen muß oder umgekehrt, so daß wenigstens eine der beiden Busleitungen 3, 4 im Vergleich zum Massepotential, welches am Knoten 42 anliegt, einen Endspannungspegel aufweist. Am Knoten 41 des Gleichrichters 31 liegt dann die Versorgungsspannung für die Peripherieeinheit 2 an. Die auf dem Bus anliegenden Signale können sowohl über den Knoten 51 an der Leitung 21 wie auch über den Knoten 52 an der Leitung 22 abgegriffen werden. Wenn die signalverarbeitenden Schaltungsteile wie beispielsweise Signalseparierung 24, Befehlsauswertung 25 oder Diagnoseauswertung 26 von einer bestimmten Polarität der Bitzustände ausgehen, könnten durch Vertauschen der Busleitungen 3 oder 4 Signale falscher Polarität weitergeleitet werden. Dies kann dadurch vermieden werden, daß zu Beginn die Polarität auf den Busleitungen 3, 4 durch die Peripherieeinheit 2 ermittelt wird und dann der Signalabgriff wahlweise an den Knoten 51 oder 52, d. h. wahlweise entweder an der Busleitung 3 oder an der Busleitung 4 erfolgt. In der Figur 7 wurde davon ausgegangen, daß der Signalabgriff über den Knoten 51 an der Eingangsleitung 21 erfolgt.

In der Figur 9 wird die Signalseparierung 24 erläutert. Die Signalseparierung weist zwei Komparatoren 61 und 62 auf, deren nichtinvertierte Eingänge jeweils mit dem Knoten 51 verbunden sind. Die invertierten Eingänge der Komparatoren 61 und 62 sind mit Spannungsknoten 63 und 64 verbunden, deren Potential durch einen Spannungsteiler mit drei Widerständen 71, 72 und 73 eingestellt wird. Der Spannungsteiler ist zwischen der Versorgungsspannung VCC und Masse angeordnet. Der Spannungsteiler ist so ausgelegt, daß am Vergleichsknoten 63 die aus der Figur 2 bekannte Vergleichsspannung V2 und am Knoten 64 die aus Figur 2 bekannte Vergleichsspannung V1 anliegt. Das Ausgangssignal des Komparators 61 stellt somit das Signal der Figur 4 und das Ausgangssignal des Komparators 62 stellt das Signal der Figur 3 dar. Durch die in Figur 9 gezeigte Schaltung läßt sich durch einfache Mittel eine Trennung der Signale unterschiedlicher Amplitude erreichen.

## Patentansprüche

1. Bussystem für die Übertragung von Nachrichten zwischen einem Gerät (1) und mindestens einer Peripherieeinheit (2), wobei die Nachrichten jeweils durch eine Folge von Highoder Low-Bitzuständen übertragen werden, wobei von dem Gerät (1) Nachrichten hoher Dringlichkeit und Nachrichten geringer Dringlichkeit an die mindestens eine Peripherieeinheit (2) sendbar sind, **dadurch gekennzeichnet, daß** die Nachrichten hoher Dringlichkeit eine größere Amplitude zwischen den High- und Low-Bitzuständen aufweisen als die Nachrichten geringer Dringlichkeit.

2. Bussystem nach Anspruch 1, **dadurch gekennzeichnet, daß** die zeitliche Dauer der einzelnen High- und Low-Bitzustände bei den Nachrichten mit großer Dringlichkeit geringer ist als die Zeitdauer der High- und Low-Bitzustände der Nachrichten geringer Dringlichkeit.

3. Bussystem nach einem der vorhergehenden Ansprüche, **dadurch gekennzeichnet, daß** zwei Busleitungen (3, 4) vorgesehen sind, daß die Nachrichten über die Busleitungen übertragen werden, und daß die Peripherieeinheit eine Energieversorgung (23) aufweist, die mit den Busleitungen (3, 4) verbunden ist.

4. Bussystem nach einem der vorhergehenden Ansprüche, **dadurch gekennzeichnet, daß** die Peripherieeinheit zur Auslösung eines Airbags ausgebildet ist, daß die Nachrichten geringer Dringlichkeit als Diagnoseanforderungen über die Betriebsbereitschaft des Airbags ausgebildet sind, und daß die Nachrichten mit hoher Dringlichkeit als Auslösebefehle für den Airbag ausgebildet sind.

5. Bussystem nach Anspruch 4, **dadurch gekennzeichnet, daß** mehrere Peripherieeinheiten (2) mit den Busleitungen (3,4) verbunden sind, daß die Diagnoseanforderung eine Adresse einer der Peripherieeinheiten (2) enthält und daß die Peripherieeinheit mit der Adresse eine Rückantwort an das Steuergerät sendet, mit der die Betriebsbereitschaft der Peripherieeinheit (2) erkennbar ist.

6. Bussystem nach Anspruch 5, **dadurch gekennzeichnet, daß** die Rückantwort aus einem Kurzschluß der Busleitungen besteht.

7. Peripherieeinheit für ein Bussystem, **dadurch gekennzeichnet, daß** Mittel zum Empfang von Signalen auf Busleitungen vorhanden sind, daß eine Signalseparierung (24) für die empfangenen Signale vorgesehen ist, und daß die Signalseparierung (24) zur Trennung von Signalen hoher Amplitude und Signalen geringer Amplitude ausgebildet ist, wobei Signale hoher Dringlichkeit mit einer größeren Amplitude und Signale niedriger Dringlichkeit mit einer niedrigeren Amplitude vorgesehen sind.

8. Peripherieeinheit nach Anspruch 7, **dadurch gekennzeichnet, daß** ihr eine Adresse zugeordnet ist, daß empfangbare Nachrichten mit einer Zieladresse versehen sind, und daß in der Peripherieeinheit Mittel vorgesehen sind, die Zieladresse mit der Adresse der Peripherieeinheit zu vergleichen.

9. Peripherieeinheit nach Anspruch 8, **dadurch gekennzeichnet, daß** durch Empfang von Nachrichten hoher Amplitude die Bearbeitung von Nachrichten niedriger Amplitude abgebrochen wird.

10. Peripherieeinheit nach einem der vorhergehenden Ansprüche 7 bis 9, **dadurch gekennzeichnet, daß** Signale niedriger Amplitude Signale niedriger Dringlichkeit, insbesondere Diagnoseanforderungen, sind, und daß Mittel zur Aussendung einer Rückantwort vorgesehen sind.

11. Peripherieeinheit nach Anspruch 10, **dadurch gekennzeichnet, daß** die Rückantwort durch Kurzschluß zweier Busleitungen des Bussystems signalisierbar ist.

12. Peripherieeinheit nach einem der Ansprüche 7 - 11, **dadurch gekennzeichnet, daß** die Energieversorgung über das Bussystem erfolgt.

13. Peripherieeinheit nach einem der Ansprüche 7 - 12, **dadurch gekennzeichnet, daß** das Peripheriegerät als Auslöseeinheit für ein Airbag und/oder Gurtstraffersystem ausgebildet ist.

14. Gerät (1) zur Aussendung von Nachrichten über ein Bussystem an mindestens eine Peripherieeinheit (2), **dadurch gekennzeichnet, daß** Mittel zur Aussendung von Nachrichten hoher Dringlichkeit mit einer größeren Amplitude und Nachrichten niedriger Dringlichkeit mit einer niedrigeren Amplitude vorgesehen sind.

15. Gerät (1) nach Anspruch 14, **dadurch gekennzeichnet, daß** die Nachrichten hoher Dringlichkeit aus Bits kürzerer Zeitdauer bestehen als die Nachrichten niedriger Dringlichkeit.

16. Gerät (1) nach einem der Ansprüche 14 oder 15, **dadurch gekennzeichnet, daß** Nachrichten hoher Dringlichkeit vor Beendigung des Absendens von Nachrichten niedriger Dringlichkeit und/oder vor Beendigung des Empfangs von Nachrichten von einem Peripheriegerät (2) absendbar sind.

17. Gerät (1) nach einem der Ansprüche 15 - 16, **dadurch gekennzeichnet, daß** die aussendbaren Nachrichten niedriger Dringlichkeit als Diagnoseanforderungen über die Betriebsbereitschaft an die Peripheriegeräte (2) ausgebildet sind, und daß die aussendbaren Nachrichten hoher Dringlichkeit als Auslösebefehle für mindestens ein bestimmtes Peripheriegerät (2) ausgebildet sind.

18. Gerät (1) nach einem der Ansprüche 15-17, **dadurch gekennzeichnet, daß** Mittel zum Empfang von Nachrichten von einer Peripherieeinheit (2) vorhanden sind.

## Claims

1. Bus system for transmitting messages between a device (1) and at least one peripheral unit (2), the messages each being transmitted by a sequence of high or low bit states, it being possible for messages with a high level of urgency and messages with a low level of urgency to be transmitted by the device (1) to the at least one peripheral unit (2), **characterized in that** the messages with a high level of urgency have a greater amplitude between the high and low bit states than the messages with a low level of urgency.

2. Bus system according to Claim 1, **characterized in that** the chronological duration of the individual high and low bit states for the messages with a high level of urgency is shorter than the duration of the high and low bit states of the messages with a low level of urgency.

3. Bus system according to one of the preceding claims, **characterized in that** two bus lines (3,4) are provided, **in that** the messages are transmitted via the bus lines, and **in that** the peripheral unit has a power supply (23) which is connected to the bus lines (3,4).

4. Bus system according to one of the preceding claims, **characterized in that** the peripheral unit is designed to trigger an airbag, **in that** the messages with a low level of urgency are configured as diagnostic requests relating to the readiness of the airbag to operate, and **in that** the messages with a high level of urgency are configured as triggering commands for the airbag.

5. Bus system according to Claim 4, **characterized in that** a plurality of peripheral units (2) are connected to the bus lines (3,4), **in that** the diagnostic request contains an address of one of the peripheral units (2), and **in that**, together with the address, the peripheral unit transmits to the control device a response with which the readiness of the peripheral unit (2) to operate can be detected.

6. Bus system according to Claim 5, **characterized in that** the response is composed of a short-circuiting of the bus lines.

7. Peripheral unit of a bus system, **characterized in that** there are means for receiving signals on bus lines, **in that** a signal separating means (24) is provided for the received signals, and **in that** the signal separating means (24) is designed to separate signals with a high amplitude and signals with a low amplitude, signals with a high level of urgency and a relatively large amplitude and signals with a low level of urgency and a relatively small amplitude being provided.

8. Peripheral unit according to Claim 7, **characterized in that** it is assigned an address, **in that** receivable messages are provided with a destination address, and **in that** means for comparing the destination address with the address of the peripheral unit are provided in the peripheral unit.

9. Peripheral unit according to Claim 8, **characterized in that** the processing of messages with a small amplitude is aborted by the reception of messages with a large amplitude.

10. Peripheral unit according to one of the preceding Claims 7 to 9, **characterized in that** signals with a small amplitude are signals with a low level of urgency, in particular diagnostic requests, and **in that** means for emitting a response are provided.

11. Peripheral unit according to Claim 10, **characterized in that** the response can be signalled by short-circuiting two bus lines of the bus system.

12. Peripheral unit according to one of Claims 7 to 11, **characterized in that** the power is supplied via the bus system.

13. Peripheral unit according to one of Claims 7 to 12, **characterized in that** the peripheral device is configured as a triggering unit for an airbag and/or seat belt retracting system.

14. Device (1) for emitting messages to at least one peripheral unit (2) via a bus system, **characterized in that** means for emitting messages with a high level of urgency and with a relatively large amplitude and messages with a low level of urgency and a relatively small amplitude are provided.

15. Device (1) according to Claim 14, **characterized in that** the messages with a higher level of urgency are composed of bits with a shorter duration than the messages with a low level of urgency.

16. Device (1) according to one of Claims 14 or 15, **characterized in that** messages with a high level of urgency can be despatched before the termination of the despatching of messages with a low level of urgency and/or before the termination of the reception of messages from a peripheral device (2).

17. Device (1) according to one of Claims 15 to 16, **characterized in that** the messages with a low level of urgency which can be emitted are configured as diagnostic requests relating to the readiness to operate to the peripheral devices (2), and **in that** the messages with a high level of urgency which can be emitted are configured as triggering commands for at least one particular peripheral device (2).

18. Device (1) according to one of Claims 15 to 17, **characterized in that** there are means for receiving messages from a peripheral unit (2).

## Revendications

1. Système de bus pour la transmission de messages entre un appareil (1) et au moins une unité périphérique (2), selon lequel les messages sont transmis sous la forme d'une succession d'états de bits hauts et bas, l'appareil (1) émettant des messages d'urgence élevée et des messages d'urgence faible vers au moins une unité périphérique (2),
**caractérisé en ce que**
les messages de grande urgence ont une amplitude plus grande entre les états bas et les états hauts des bits que les messages d'urgence moindre.

2. Système de bus selon la revendication 1,
**caractérisé en ce que**
la durée des différents hauts et bas des bits pour des messages de grande urgence est inférieure à la durée des états bas et hauts des messages d'urgence moindre.

3. Système de bus selon l'une des revendications précédentes,
**caractérisé en ce que**
deux lignes de bus transmettent les messages et l'unité périphérique comporte une alimentation en énergie (23) reliée aux lignes de bus (3, 4).

4. Système de bus selon l'une des revendications précédentes,
**caractérisé en ce que**
l'unité périphérique est destinée à déclencher un coussin gonflable et les messages d'urgence moindre sont des requêtes de diagnostic concernant l'aptitude au fonctionnement du coussin gonflable, et les messages d'urgence élevée sont des ordres de déclenchement destinés au coussin gonflable.

5. Système de bus selon la revendication 4,
**caractérisé par**
plusieurs unités périphériques (2) reliées aux lignés de bus (3, 4), la requête de diagnostic contenant l'adresse d'une unité périphérique (2) et l'unité périphérique de cette adresse renvoyant une réponse à l'appareil de commande lui permettant de connaître l'aptitude au fonctionnement de l'unité périphérique (2).

6. Système de bus selon la revendication 5,
**caractérisé en ce que**
la réponse est formée par la mise en court-circuit des lignes de bus.

7. Unité périphérique pour un système de bus,
**caractérisée en ce qu'**
elle comprend des moyens pour recevoir des signaux présents sur les lignes de bus, et un moyen de séparation des signaux (24) pour les signaux reçus, et le moyen de séparation de sighaux (24) est réalisé pour séparer les signaux d'amplitude élevée des signaux d'amplitude faible, les signaux de grande urgence ayant une grande amplitude et les signaux d'urgence moindre ayant une amplitude faible.

8. Unité périphérique selon la revendication 7,
**caractérisée en ce qu'**
il lui est associé une adresse et les messages susceptibles d'être reçus comportent une adresse de destination et
l'unité périphérique comporte des moyens permettant de comparer l'adresse de destination à l'adresse de l'unité périphérique.

9. Unité périphérique selon la revendication 8,
**caractérisée en ce qu'**
à la réception de messages d'amplitude élevée, elle interrompt le traitement de messages d'amplitude faible.

10. Unité périphérique selon l'une des revendications 7 à 9,
**caractérisée en ce que**
les signaux d'amplitude faible sont des signaux d'urgence faible, notamment des requêtes de diagnostic et l'unité comporte des moyens pour émettre une réponse.

11. Unité périphérique selon la revendication 10,
**caractérisée en ce que**
la réponse est un court-circuit établi entre deux lignes de bus du système de bus.

12. Unite périphérique selon l'une des revendications 7 à 11,
**caractérisée en ce que**
l'alimentation en énergie se fait par l'intermédiaire du système de bus.

13. Unité périphérique selon l'une des revendications 7 à 12,
**caractérisée en ce que**
l'unité périphérique est l'unité de déclenchement d'un coussin gonflable et/ou d'un système raidisseur de ceinture.

14. Appareil (1) pour émettre des messages par l'intermédiaire d'un système de bus vers au moins une unité périphérique (2),
**caractérisé en ce qu'**
Il comporte des moyens pour émettre des messages de grande urgence avec une grande amplitude et des messages d'urgence moindre avec une amplitude faible.

15. Appareil (1) selon la revendication 14,
**caractérisé en ce que**
les messages de grande urgence sont formés de bits de durée plus courte que les messages d'urgence moindre.

16. Appareil (1) selon l'une des revendications 14 ou 15,
**caractérisé en ce que**
les messages de grande urgence sont émis avant la fin de l'émission de messages d'urgence moindre et/ou avant la fin de la réception de messages par une unité périphérique (2).

17. Appareil (1) selon l'une des revendications 15 à 16,
**caractérisé en ce que**
les messages d'urgence faible, à émettre, sont des requêtes de diagnostic concernant l'aptitude au fonctionnement à destination des unités périphériques (2), et les messages à émettre avec une grande urgence sont des ordres de déclenchement d'au moins une certaine unité périphérique (2).

18. Appareil (1) selon l'une des revendications 15 à 17,
**caractérisé par**
des moyens pour recevoir des messages d'une unité périphérique (2).
